# EUROPEAN PATENT SPECIFICATION

(11) **EP 2 673 544 B1**
(45) Date of publication and mention of the grant of the patent: **19.06.2019**
(21) Application number: 12744799.3
(22) Date of filing: 07.02.2012
(51) Int. Cl.: F16L 37/14

(54) **QUICK CONNECTOR**
SCHNELLVERBINDER
RACCORD RAPIDE

(30) Priority: 11.02.2011 US 201161442057 P
(43) Date of publication of application: 18.12.2013
(73) Proprietor: A. RAYMOND et Cie, 38000 Grenoble (FR)
(72) Inventor: PARKS, Brian, Howell, MI 48843 (US); LUTZKE, Matthew, Clarkston, MI 48346 (US)
(74) Representative: Grünecker Patent- und Rechtsanwälte PartG mbB
(86) International application number: PCT/US2012/024130
(87) International publication number: WO 2012/109231

(56) References cited:
- WO-A2-01/77562
- DE-A1- 4 142 640
- DE-A1- 19 963 368
- FR-A1- 2 919 373
- GB-A- 2 073 350
- JP-A- 2002 174 383
- US-A- 4 347 870
- US-A- 5 364 131
- US-A- 5 507 630
- US-A- 5 782 508
- US-A- 5 863 079
- US-A1- 2007 194 173

## Description

### BACKGROUND OF THE INVENTION

### I. Field of the Invention

The present invention relates to quick connector assemblies, and more specifically, to quick connector assemblies which receive and lock with a male end form.

### 2. Description of the Prior Art

FR 2 919 373 A1 discloses a quick connector having a housing with a bore for receiving a male end form. A lock ring and an axially elastic tubular member are provided within the housing. An opening defined by the lock ring is offset with respect to the bore of the housing, as the lock ring is biased in a radial direction by elastic tongues. When the male end form is inserted, a bead of the male end form engages a conical surface of the lock ring and thereby aligns the opening of the lock ring with the bore of the housing. After the bead of the male end form has passed beyond the lock ring, the lock ring is again moved to be offset with respect to the bore of the housing by the biasing force of the elastic tongues so that bead is locked within the housing due to the offset between the opening of the lock ring and the bore of the housing.

Quick connector assemblies are used in many different applications for quickly connecting and establishing fluid communication between a male end form and a hose or another tube. It is important that the male end form can quickly engage with the quick connector assembly to minimize assembly time and labor, e.g. on an assembly line. At the same time, the quick connector assembly must be very reliable and must establish a fluid-tight seal with the male end form which will not leak or otherwise disengage from the male end form. In the automotive industry, quick connector assemblies are often used for fuel lines, and failure of the quick connector assembly could pose a serious safety risk. To mitigate this risk, manufacturers have developed assemblies that cannot be latched down until the male end form is completely inserted into the quick connector.

One known type of quick connector assembly includes a housing having a female receiving portion for receiving a male end form and a stem portion for receiving a hose. A locker is movable between a non-engaged position for allowing insertion or withdrawal of the male end form and an engaged position for engaging the bead to retain the male end form in the housing. The locker includes a ring that prevents the locker from moving to the engaged position until the male end form is inserted into the housing by a predetermined distance, whereupon the ring breaks to allow the male end form to be fully inserted into the housing. Once the male end form is fully inserted into the housing and the bead passes the locker, the locker may be moved downwardly into the engaged position to engage the bead and hold the male end form in a locked position within the housing. The locker may then be moved back to the non-engaged position for allowing withdrawal of the male end form. However, once the male end form is removed from the quick connector assembly, because the ring has been broken, there is nothing to prevent the locker from moving back into the engaged position, even when the male end form is not disposed in the housing. Thus, this type of quick connector assembly only prevents the locker from moving to the engaged position until the quick connector assembly first receives a male end form. Thereafter, there is no safety mechanism for preventing the locker from moving to the engaged position, even when the male end form is not inserted into the housing of the quick connector assembly. A user could accidentally move the locker to the engaged position without the male end form being properly locked within the housing.

It is an object of the invention to provide an improved quick connector assembly which is both reliable and reusable and an improved connection method.

### SUMMARY OF THE INVENTION

This object is achieved by the subject matter of claim 1 and the subject matter of claim 10, respectively. The dependent claims describe advantageous embodiments of the invention.

One aspect of the present invention provides for a quick connector assembly including a plunger which is slidably disposed in a housing and is biased in a first direction by a spring. A locker is restricted to a non-engaged position until the male end form has been inserted into the housing by a predetermined distance, whereupon the plunger is moved in a second direction opposite of the first direction. Once the male end form has been inserted a sufficient distance into the housing, the locker can be moved into the engaged position, thereby locking the male end form with the quick connector assembly. This aspect of the present invention is advantageous because the male end form can only be correctly locked and sealed to the quick connector assembly, and the male end form can be removed and re-installed in the quick connector assembly with no loss in functionality of the quick connector assembly. Thus, movement of the locker into the engaged position provides a visual indication that the male end form is properly locked and sealed with the quick connector assembly. This aspect of the invention is also advantageous because the plunger remains biased against the bead of the male end form when the male end form is locked with the quick connector, thereby restricting movement of the male end form relative to the housing, even if the quick connector assembly is shaken, e.g. while a vehicle is travelling down a bumpy road. Even further, this aspect of the invention is advantageous because it allows the quick connector assemblies to mate with low profile male end forms, i.e. male end forms having a short distance between the bead and the tangent of a bend or a surface that deviates from the male end form's outer tube diameter.

According to another aspect of the invention, the locker includes a pair of inside legs which extend through lower gaps in the housing and provide an additional visual indication that the male end form is properly locked with the quick connector assembly. This is another safety feature of the quick connector assembly.

According to yet another aspect of the invention, the locker includes a pair of outside legs, each of which has a first arc-shaped section for contacting the housing when the locker is in the engaged position and a second arc-shaped section for contacting the housing when the locker is in the non-engaged position. This is yet another safety feature of the quick connector assembly, because the outside legs only allow the locker to move between these two positions, i.e. it cannot be in a partially-engaged position, and the outside legs also ensure that only a deliberate action by a user can move the locker from the engaged position to the non-engaged position.

### BRIEF DESCRIPTION OF THE DRAWINGS

These and other features and advantages of the present invention will be readily appreciated, as the same becomes better understood by reference to the following detailed description when considered in connection with the accompanying drawings wherein:
Figure 1 is a cross-sectional view of the exemplary embodiment of the quick connector assembly with the locker being in a non-engaged position;
Figure 2 is a cross-sectional view of the exemplary embodiment of the quick connector assembly with the locker being in an engaged position;
Figure 3 is a perspective and fragmentary view of the exemplary embodiment of the quick connector assembly with the locker being in the non-engaged position;
Figure 4 is a perspective and fragmentary view of the exemplary embodiment of the quick connector assembly with the locker being in the engaged position; and
Figure 5 is a flow chart depicting an exemplary method of connecting a male end form to a quick connector assembly.

### DETAILED DESCRIPTION OF THE ENABLING EMBODIMENTS

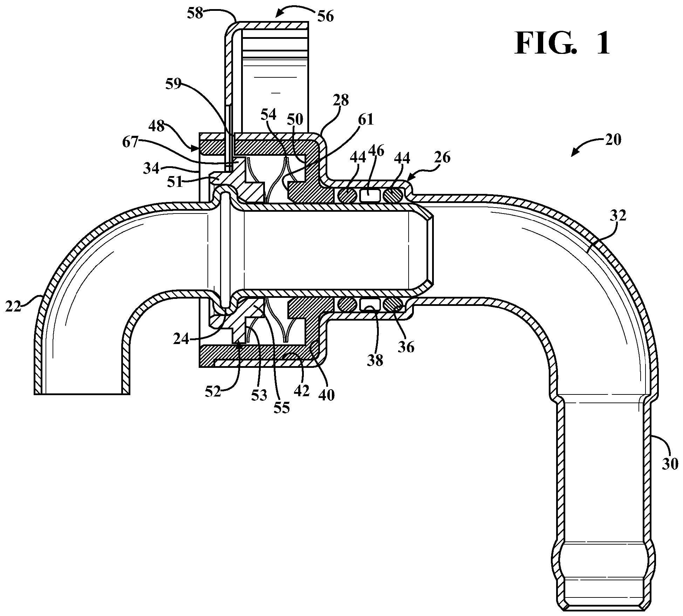

Referring to the Figures, wherein like numerals indicate corresponding parts throughout the several views, a quick connector assembly **20** for establishing fluid communication between a male end form **22** and another hose or tube (not shown) is generally shown in Figures 1-4. The male end form **22** is preferably of metal, has a generally tubular shape and extends to a tube end. The male end form **22** also includes a bead **24,** or an annular ridge, spaced a predetermined distance from the tube end.

The quick connector assembly **20** includes a housing **26,** generally indicated, presenting a female receiving portion **28** for receiving the male end form **22** and a stem portion **30** for receiving and establishing fluid communication with a hose or any other tube (not shown). In the exemplary embodiment, the housing **26** is formed of metal which is shaped through a deep drawing process. However, it should be appreciated that any other formable material may be used in place of metal (including, for example, polymeric materials or ceramics), and the housing **26** may be shaped through any desired forming process.

The housing **26** defines a bore **32** extending between the female receiving portion **28** and the stem portion **30** for conveying a fluid between the male end form **22** and the hose (not shown). The female receiving portion **28** extends along an axis and presents an inlet orifice **34** for receiving the male end form **22.** The bore **32** of the female receiving portion **28** is twice-counterbored to present a first shoulder **36** opening up to a first section **38** and a second shoulder **40** opening up to a larger second section **42.** Thus, the first section **38** extends between the first and second shoulders **36, 40** and has a first diameter, and the second section **42** extends between the second shoulder **40** and the inlet orifice **34** and has a second diameter which is larger than the first diameter.

A pair of sealing rings **44** is disposed in the first section **38** of the bore **32** with one of the sealing rings **44** abutting the first shoulder **36,** and a spacer **46** is sandwiched in the first section **38** between the sealing rings **44.** The sealing rings **44** are preferably O-rings which could be made of a variety of materials depending on the fluid and temperature requirements of the quick-connector assembly **20.** The spacer **46** of the exemplary embodiment is of a thermoplastic material and is produced through an injection molding process. However, the spacer **46** can be of any other material and may be produced using any desirable forming method. It should also be appreciated that the first section **38** could alternately include any number (including zero) of sealing rings **44.**

The quick connector assembly **20** of the exemplary embodiment further includes a generally cylindrical bushing **48** disposed in the second section **42** of the bore **32** and extending between the second shoulder **40** and the inlet orifice **34.** The bushing **48** also extends radially inwardly along the second shoulder **40** of the housing **26** to present a first spring seat **50** (discussed in further detail below) and axially into the first section **38** to abut the first sealing ring **44** for retaining the first and second sealing rings **44** and the spacer **46** in the first section **38** of the bore **32.** The bushing **48** of the exemplary embodiment is of a thermoplastic material and is produced through an injection molding process. However, the bushing **48** could alternately be of any other material and may be produced using any desirable forming process.

The quick connector assembly **20** also includes a plunger **52** having a generally annular shape which is slidably disposed within the bushing **48** in the second section **42** of the bore **32.** The plunger **52** has a front section **51** with a large diameter for receiving the bead of the male end form **22** and a rear section **55** having a smaller diameter for receiving the portion of the male end form **22** in front of the bead **24.** The plunger **52** also includes a radially extending portion **57** which is sized similarly to the opening of the bushing **48** for guiding movement of the plunger **52** within the bushing **48.**

The plunger **52** also presents a second spring seat **53** facing the first spring seat **50** of the bushing **48,** which was discussed above. A spring **54** is disposed in the second section **42** of the bore **32** and extends between the first spring seat **50** of the bushing **48** and the second spring seat **53** of the plunger **52** for biasing the plunger **52** in a first axial direction toward the inlet orifice **34** and into a resting position, which is shown in Figure 1 and discussed in further detail below. The spring **54** of the exemplary embodiment is a wave spring **54** formed of stainless steel stock material, though it should be appreciated that any other type of compression spring **54** could alternately be used. The exemplary plunger **52** is of a thermoplastic material and is produced through an injection molding process. However, the plunger **52** could be of any other material and may be produced using any desirable forming method.

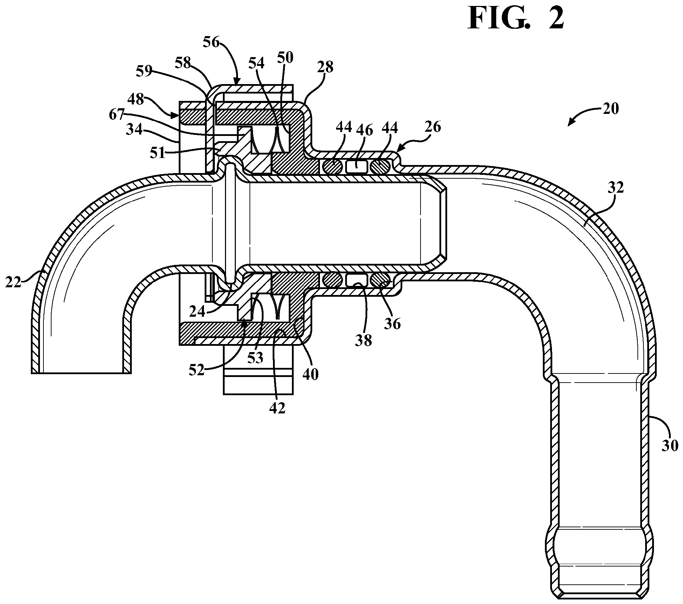

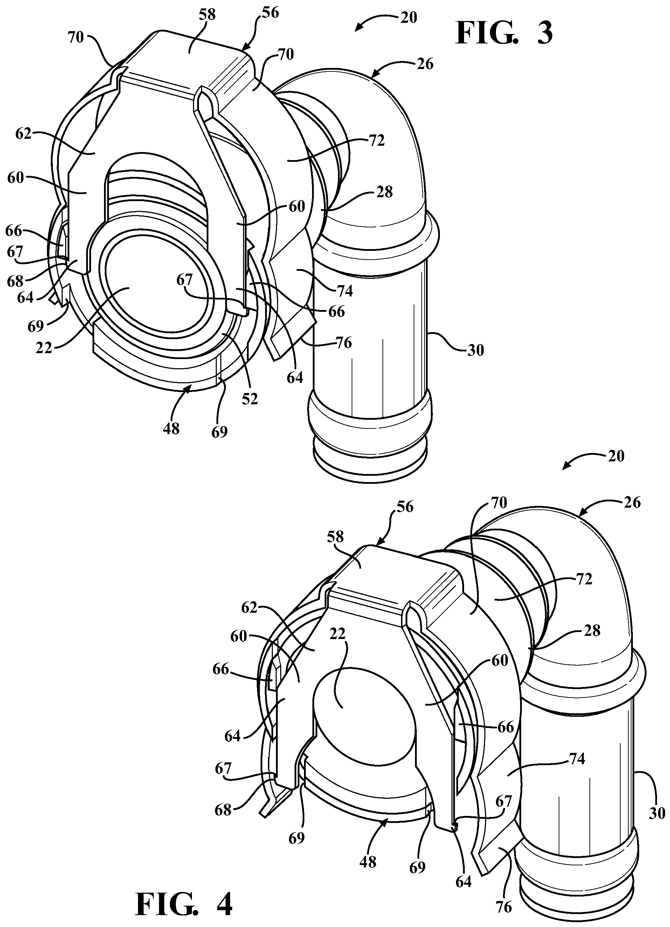

The quick connector assembly **20** also includes a locker **56** that is movable between an engaged position (Figures 2 and 4) for retaining the male end form **22** in the housing **26** and a non-engaged position (Figures 1 and 3) for allowing the male end form **22** to be inserted or withdrawn from the housing **26.** The locker **56** includes a base **58** and a pair of inside legs **60** extending downwardly into the bore **32** through at least one upper gap **59** in the female receiving portion **28** of the housing **26** and the bushing **48.** Each of the inside legs **60** has an upper section **62** and a different lower section **64.** The upper sections **62** are spaced from one another by a distance that is slightly greater than the diameter of the male end form **22,** and the lower sections **64** are spaced by a distance that is greater than the diameter of the bead **24** of the male end form **22** but less than the diameter of the plunger **52.** Thus, when the locker **56** is in the non-engaged position of Figures 1 and 3, the spring **54** biases the plunger **52** against the lower sections **64** of the inside legs **60,** and this position is hereinafter referred to as a "resting position". Because of the larger spacing between the lower sections **64** of the inside legs **60,** when the locker **56** is in the non-engaged position, the male end form **22,** including the bead **24,** may be inserted into the housing **26** past the inside legs **60** of the locker **56** to the location shown in Figures 2 and 4. Once the bead **24** clears the inside legs **60,** then the locker **56** can be moved downwardly into the engaged position, which is shown in Figures 2 and 4. With the locker **56** in the engaged position, the bead **24** of the male end form **22** is trapped between the upper sections **62** of the inside legs **60** and the radially extending portion **57** of the plunger **52.** With that, the male end form **22** has successfully been locked and sealed with the quick connector assembly **20.** Additionally, the plunger **52** is biased against the bead **24** of the male end form **22,** and therefore, movement of the male end form **22** relative to the housing **26** is restricted, even if the quick connector assembly **20** is vibrated, such as when a vehicle is travelling down a bumpy road. The bushing **48** may also have a flange **61** extending toward the plunger **52** for contacting the plunger **52** when the male end form **22** is locked in the quick connector assembly **20.**

The bushing **48** further includes a pair of circumferentially spaced shelves **66,** and each of the inside legs **60** of the locker **56** present an outwardly extending lip **67** corresponding with one of the shelves **66** and a tapered section **68** leading to the lip **67.** When the locker **56** is initially installed onto the housing **26,** the tapered sections **68** of the inside legs **60** engage the bushing **48** to flex the inside legs **60** inwardly. Once the lips **67** clear the shelves **66,** then the inside legs **60** flex back outwardly to their unstressed positions. If a user attempts to remove an already installed locker **56** from the housing **26,** the lips **67** on the inside legs **60** will engage the shelves **66** of the bushing **48** to prevent the locker **56** from being removed from the housing **26.** Preferably, the lip **67** and shelves **66** are strong enough to withstand a force of up to ninety (90) Newtons.

When the locker **56** is in the engaged position, the lower sections **64** of the inside legs **60** extend downwardly through lower gaps **69** in the bushing **48** and the housing **26** to provide evidence that the locker **56** is in the engaged position. This is advantageous because it provides a visual cue to a person that the locker **56** has reached the engaged position and the male end form **22** is properly locked and sealed with the quick connector assembly **20.**

The locker **56** also includes a pair of outside legs **70** extending downwardly from the base **58** for engaging the exterior surface of the female receiving portion **28** of the housing **26.** The outside legs **70** are spaced from one another and each has a first arc-shaped section **72** having the same curvature as the exterior surface of the housing **26,** a second arc-shaped section **74** also having the same curvature as the exterior surface of the housing **26** and a flared section **76** flaring outwardly from the second arc-shaped section **74.** When the locker **56** is installed onto the female receiving portion **28** of the housing **26** during assembly of the quick connector assembly **20,** the flared sections **76** of the outside legs **70** help guide the outside legs **70** onto the housing **26.** The locker **56** is then pushed downwardly to flex the outside legs **70** outwardly until the second arc-shaped sections **74** engage the housing **26.** At this point, the locker **56** is in the non-engaged position shown in Figures 1 and 3. To move the locker **56** downwardly into the engaged position shown in Figures 2 and 4, a downward force must be applied to the base **58** to flex the outside legs **70** outwardly until the first arc-shaped sections **72** engage the housing **26.** The shape of the outside legs **70** only allows the locker **56** to remain in either the non-engaged position or the engaged position, and thus, the locker **56** of the exemplary embodiment cannot be moved into a partially-engaged position. This is yet another important safety feature of the quick connector assembly **20.**

As best shown in Figure 4, when the locker **56** of the exemplary embodiment is in the engaged position, the base **58** is raised relative to the housing **26,** and the inside legs **60** extend downwardly from either side of the base **58.** This arrangement presents an opening between the base **58** and the housing **26** for receiving a regular screw-driver, or a similar tool, which can be inserted into this opening and used to pry the locker **56** upwardly to the non-engaged position. Alternatively, the flared sections **76** of the outside legs **70** of the locker **56** could be pulled outwardly and upwardly to move the locker **56** from the engaged position to the non-engaged position. Thus, only a deliberate action by the user can move the locker **56** into the non-engaged position. This is still another safety feature of the quick connector assembly **20.**

In the drawings of the exemplary embodiment, the stem portion **30** extends at a right angle and is shaped for mating with a hose (not shown). However, it should be appreciated that the stem portion **30** could take many different forms for mating with a wide variety of tubes and hoses depending on the desired application.

In operation, the quick connector assembly **20** starts with the locker **56** in the non-engaged position and the plunger **52** in the resting position. As discussed above, in this position, the plunger **52** is biased forwardly by the wave spring **54** against the lower sections **64** of the inside legs **60** of the locker **56.** This contact between the inside legs **60** and the plunger **52** prevents the locker **56** from moving downwardly to the engaged position and prevents the plunger **52** from escaping the housing **26.** The male end form **22** is then urged in an axial direction into the bore **32** of the housing **26** through the receiving inlet **34,** and the front of the male end form **22** is sealed to the housing **26** through the sealing rings **44** to prevent fluid from escaping the quick connector assembly **20.** Once the male end form **22** has been inserted far enough into the bore **32,** the bead **24** of the male end form **22** will engage the plunger **52.** Further insertion of the male end form **22** will overcome the biasing force from the wave spring **54** to move the plunger **52** backwardly. Once the bead **24** clears the inside legs **60,** the locker **56** can be urged downwardly into the engaged position to trap the bead **24** of the male end form **22** between the plunger **52** and the upper sections **62** of the inside legs **60** of the locker **56.** It should be noted that it is only after the male end form **22** has been inserted sufficiently far into the bore **32** of the housing **26** for the bead **24** to clear the inside legs **60** that the locker **56** can be moved into the engaged position. This feature, when combined with the visible cue that the locker **56** has been successfully moved into the engaged position ensures that the male end form **22** can only be properly locked and sealed with the quick connector assembly **20.**

To remove the male end form **22** from the quick connector assembly **20,** a person can either use a regular screwdriver to pry the base **58** of the locker **56** upwardly or the person can push the outside legs **70** of the locker **56** outwardly and urge the locker **56** upwardly. Once the locker **56** reaches the non-engaged position, the wave spring **54** and plunger **52** automatically ejects the male end form **22** from the bore **32** of the housing **26.** Because of the lips **67** of the inside legs **60** and the shelves **66** of the bushing **48,** the locker **56** cannot be completely removed from the housing **26.**

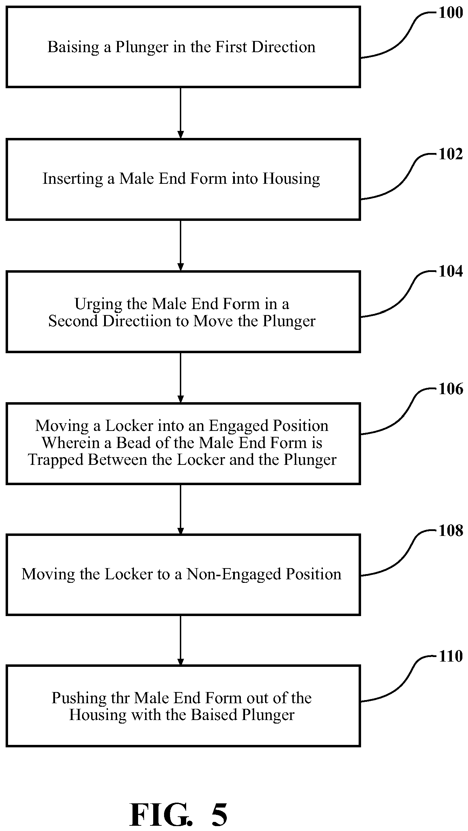

Referring now to the flow chart of Figure 5 and the structure shown in Figures 1-4 and discussed above, another aspect of the present invention provides for a method of connecting a male end form **22** having a bead **24** to a quick connector assembly **20.** The method includes the step **100** of biasing a plunger **52** in a first direction to a resting position where the plunger **52** restricts a locker **56** to a non-engaged position. The method proceeds with the step **102** of inserting the male end form **22** into a housing **26** of the quick connector assembly **20** so that the bead **24** of the male end form **22** contacts the plunger **52.** The method then continues with the step **104** of urging the male end form **22** in a second direction opposite of the first direction to move the plunger **52** out of the resting position and free of the locker **56.** The method then proceeds with the step **106** of moving the locker **56** from the non-engaged position to an engaged position wherein the bead **24** of the male end form **22** is trapped between the plunger **52** and the locker **56.** The method may also include the step **108** of moving the locker **56** back into the non-engaged position and the step **110** of pushing the male end form **22** out of the housing **26** with the biased plunger **52.**

Obviously, many modifications and variations of the present invention are possible in light of the above teachings and may be practiced otherwise than as specifically described while within the scope of the appended claims.

## Claims

1. A quick connector assembly (20) for mating with a male end form (22) having a bead (24) comprising:
a housing (26) having a female receiving portion (28) and a stem portion (30);
said housing (26) presenting a bore (32);
a plunger (52) slidably disposed in said bore (32) of said housing (26);
a spring (54) disposed in said bore (32) of said housing (26) and engaging said plunger (52) for biasing said plunger (52) in a first direction toward a resting position; and
a locker (56) including a pair of inside legs (60) each having an upper section (62) and a lower section (64), the locker (56) being movable from a non-engaged position downwardly to an engaged position only in response to the male end form (22) being inserted into said bore (32) of said housing (26) and sliding said plunger (52) away from said resting position,
wherein said upper sections (62) of said inside legs (60) are spaced from one another by a distance which is greater than the diameter of the male end form (22) and less than the diameter of the bead (24) for trapping the male end form (22) in said housing (26) when said locker (56) is in said engaged position; and
wherein said lower sections (64) of said inside legs (60) are spaced from one another by a distance which is greater than the diameter of the bead (24) of the male end form (22) for allowing the bead (24) to pass between the lower sections (64) when said locker (56) is in said non-engaged position.

2. The quick connector assembly as set forth in claim 1 wherein said housing (26) includes at least one upper gap (59) and wherein said inside legs (60) of said locker (56) extend through said at least one upper gap (59).

3. The quick connector assembly as set forth in claim 2 further including a bushing (48) disposed in said housing (26) and wherein said bushing (48) includes at least one shelf (66) and wherein each of said inside legs (60) includes at least one lip (67) for cooperating with said shelves (66) to prevent said locker (56) from being removed from said housing (26).

4. The quick connector assembly as set forth in any one of the preceding claims wherein said housing (26) includes a pair of lower gaps (69) and wherein said inside legs (60) extend through said lower gaps (69) and out of said housing (26) when said locker (56) is in said engaged position.

5. The quick connector assembly as set forth in any one of the preceding claims wherein said spring (54) is a wave spring.

6. The quick connector assembly as set forth in any one of the preceding claims further including a bushing (48) disposed in said housing (26) and presenting a first spring seat (50) and wherein said plunger (52) presents a second spring seat (53) and wherein said spring (54) extends between said first and second spring seats (50, 53) to bias said plunger (52) in said resting position.

7. The quick connector assembly as set forth in any one of the preceding claims wherein said housing (26) includes a first section (38) including at least one seal (44) for establishing a sealing relationship with the male end form (22) and a larger second section (42) containing said plunger (52) and said spring (54).

8. The quick connector assembly as set forth in any one of the preceding claims wherein the locker (56) includes a pair of outside legs (70) for engaging the exterior of said housing (26) and for guiding said locker (56) between said engaged and non-engaged positions.

9. The quick connector assembly as set forth in claim 8 wherein the outside legs (70) have a first arc- shaped section (72) having the same curvature as the exterior surface of said housing (26) and a second arc-shaped section (74) having the same curvature as the exterior surface of said housing (26).

10. A method of connecting a male end form (22) having a bead (24) to a quick connector assembly (20), comprising the steps of:
biasing a plunger (52) in a first direction to a resting position where the plunger (52) restricts a locker (56) to a non-engaged position;
inserting the male end form (22) into a housing (26) of the quick connector assembly (20) so that the bead (24) of the male end form (22) contacts the plunger (52);
urging the male end form (22) in a second direction opposite of the first direction to move the plunger (52) out of the resting position and free of the locker (56); and
moving the locker (56) from the non-engaged position downwardly to an engaged position wherein the bead (24) of the male end form (22) is trapped between the plunger (52) and the locker (56),
wherein the locker (56) includes a pair of inside legs (60) each having an upper section (62) and a lower section (64),
wherein said upper sections (62) of said inside legs (60) are spaced from one another by a distance which is greater than the diameter of the male end form (22) and less than the diameter of the bead (24) for trapping the male end form (22) in said housing (26) when said locker (56) is in said engaged position; and
wherein said lower sections (64) of said inside legs (60) are spaced from one another by a distance which is greater than the diameter of the bead (24) of the male end form (22) for allowing the bead (24) to pass between the lower sections (64) when said locker (56) is in said non-engaged position.

11. The method as set forth in claim 10 further comprising the steps of moving the locker (56) back from the engaged position to the non-engaged position and pushing the male end form (22) out of the housing (26) with the biased plunger (52).

## Patentansprüche

1. Schnellverbinderanordnung (20) für die Verbindung mit einer männlichen Endform (22), die einen Wulst (24) aufweist, umfassend:
ein Gehäuse (26), das einen weiblichen Aufnahmeteil (28) und einen Stammteil (30) aufweist,
wobei das Gehäuse eine Bohrung (32) aufweist,
einen Kolben (52), der gleitbar in der Bohrung (32) des Gehäuses (26) angeordnet ist,
eine Feder (54), die in der Bohrung (32) des Gehäuses (26) angeordnet ist und in den Kolben (52) eingreift, um den Kolben (52) in einer ersten Richtung zu einer Ruheposition vorzuspannen, und
eine Verriegelung (56), die ein Paar von inneren Schenkeln (60) enthält, die jeweils einen oberen Abschnitt (62) und einen unteren Abschnitt (64) umfassen, wobei die Verriegelung (56) von einer nicht-eingegriffenen Position nach unten zu einer eingegriffenen Position bewegt werden kann, indem einfach die männliche Endform (22) in die Bohrung (32) des Gehäuses (26) eingesteckt wird und der Kolben (52) weg von der Ruheposition geschoben wird,
wobei die oberen Abschnitte (62) der inneren Schenkel (60) voneinander durch eine Distanz beabstandet sind, die größer als der Durchmesser der männlichen Endform (22) und kleiner als der Durchmesser des Wulsts (24) ist, um die männliche Endform (22) in dem Gehäuse (26) einzuschließen, wenn sich die Verriegelung (56) in der eingegriffenen Position befindet, und
wobei die unteren Abschnitte (64) der inneren Schenkel (60) voneinander durch eine Distanz beabstandet sind, die größer als der Durchmesser des Wulsts (24) der männlichen Endform (22) ist, sodass der Wulst (24) zwischen den unteren Abschnitten (64) hindurchgehen kann, wenn sich die Verriegelung (56) in der nicht-eingegriffenen Position befindet.

2. Schnellverbinderanordnung nach Anspruch 1, wobei das Gehäuse (26) wenigstens einen oberen Zwischenraum (59) umfasst und sich die inneren Schenkel (60) der Verriegelung (56) durch den wenigstens einen oberen Zwischenraum (59) erstrecken.

3. Schnellverbinderanordnung nach Anspruch 2, die weiterhin eine in dem Gehäuse (26) angeordnete Muffe (48) umfasst, wobei die Muffe (48) wenigstens eine Ablage (66) umfasst und wobei jeder der inneren Schenkel (60) wenigstens eine Lippe (67) für ein Zusammenwirken mit den Ablagen (66) umfasst, um zu verhindern, dass die Verriegelung (56) von dem Gehäuse (26) entfernt wird.

4. Schnellverbinderanordnung nach einem der vorstehenden Ansprüche, wobei das Gehäuse (26) ein Paar von unteren Zwischenräumen (69) umfasst und wobei sich die inneren Schenkel (60) durch die unteren Zwischenräume (69) und aus dem Gehäuse (26) erstrecken, wenn sich die Verriegelung (56) in der eingegriffenen Position befindet.

5. Schnellverbinderanordnung nach einem der vorstehenden Ansprüche, wobei die Feder (54) eine Wellenfeder ist.

6. Schnellverbinderanordnung nach einem der vorstehenden Ansprüche, die weiterhin eine Muffe (48) umfasst, die in dem Gehäuse (26) angeordnet ist und einen ersten Federsitz (50) vorsieht, wobei der Kolben (52) einen zweiten Federsitz (53) vorsieht und wobei sich die Feder (54) zwischen den ersten und zweiten Federsitzen (50, 53) erstreckt, um den Kolben (52) zu der Ruheposition vorzuspannen.

7. Schnellverbinderanordnung nach einem der vorstehenden Ansprüche, wobei das Gehäuse (26) einen ersten Abschnitt (38), der wenigstens eine Dichtung (44) für das Herstellen einer dichten Beziehung mit der männlichen Endform (22) enthält, und einen größeren zweiten Abschnitt (42), der den Kolben (52) und die Feder (54) enthält, umfasst.

8. Schnellverbinderanordnung nach einem der vorstehenden Ansprüche, wobei die Verriegelung (56) ein Paar von äußeren Schenkeln (70) für das Eingreifen in das Äußere des Gehäuses (26) und für das Führen der Verriegelung (56) zwischen den eingegriffenen und nicht-eingegriffenen Positionen umfasst.

9. Schnellverbinderanordnung nach Anspruch 8, wobei die äußeren Schenkel (70) einen ersten bogenförmigen Abschnitt (72) mit der gleichen Krümmung wie die Außenfläche des Gehäuses (26) und einen zweiten bogenförmigen Abschnitt (74) mit der gleichen Krümmung wie die Außenfläche des Gehäuses (26) aufweisen.

10. Verfahren zum Verbinden einer einen Wulst (24) aufweisenden männlichen Endform (22) mit einer Schnellverbinderanordnung (20), die folgenden Schritte umfassend:
Vorspannen eines Kolbens (52) in einer ersten Richtung zu einer Ruheposition, an welcher der Kolben (52) eine Verriegelung (56) an einer nicht-eingegriffenen Position hält,
Einstecken der männlichen Endform (22) in ein Gehäuse (26) der Schnellverbinderanordnung (20), sodass der Wulst (24) der männlichen Endform (22) den Kolben (52) kontaktiert,
Drücken der männlichen Endform (22) in einer zweiten Richtung, die der ersten Richtung entgegengesetzt ist, um den Kolben (52) aus der Ruheposition und frei von der Verriegelung zu bewegen, und
Bewegen der Verriegelung (56) von der nicht-eingegriffenen Position nach unten zu einer eingegriffenen Position, wobei der Wulst (24) der männlichen Endform (22) zwischen dem Kolben (52) und der Verriegelung (56) eingeschlossen wird,
wobei die Verriegelung (56) ein Paar von inneren Schenkeln (60) enthält, die jeweils einen oberen Abschnitt (62) und einen unteren Abschnitt (64) aufweisen,
wobei die oberen Abschnitte (62) der inneren Schenkel (60) voneinander durch eine Distanz beabstandet sind, die größer als der Durchmesser der männlichen Endform (22) und kleiner als der Durchmesser des Wulsts (24) ist, um die männliche Endform (22) in dem Gehäuse (26) einzuschließen, wenn sich die Verriegelung (56) in der eingegriffenen Position befindet, und
wobei die unteren Abschnitte (64) der inneren Schenkel (60) voneinander durch eine Distanz beabstandet sind, die größer als der Durchmesser des Wulsts (24) der männlichen Endform (22) ist, damit der Wulst (24) zwischen den unteren Abschnitten (64) hindurchgehen kann, wenn sich die Verriegelung (56) in der nicht-eingegriffenen Position befindet.

11. Verfahren nach Anspruch 10, das weiterhin Schritte zum Bewegen der Verriegelung (56) zurück von der eingegriffenen Position zu der nicht-eingegriffenen Position und zum Drücken der männlichen Endform (22) aus dem Gehäuse (26) mit dem vorgespannten Kolben (52) umfasst.

## Revendications

1. Ensemble raccord rapide (20) destiné à s'accoupler avec une forme d'extrémité mâle (22) ayant un bourrelet (24) comprenant:
un logement (26) ayant une partie réception femelle (28) et une partie tige (30);
ledit logement (26) présentant un alésage (32);
un piston (52) disposé de manière coulissante dans ledit alésage (32) dudit logement (26);
un ressort (54) disposé dans ledit alésage (32) dudit logement (26) et venant en prise avec ledit plongeur (52) pour solliciter ledit plongeur (52) dans une première direction vers une position de repos; et
un casier (56) comprenant une paire de pieds intérieurs (60) ayant chacun une section supérieure (62) et
une section inférieure (64), le casier (56) pouvant être déplacé d'une position non engagée vers le bas vers une position en prise uniquement en réponse à l'introduction de la forme d'extrémité mâle (22) dans ledit alésage (32) dudit logement (26) et en faisant coulisser ledit piston (52) pour l'éloigner de ladite position de repos,
dans lequel lesdites parties supérieures (62) desdits pieds intérieurs (60) sont espacées les unes des autres d'une distance qui est supérieure au diamètre de la forme d'extrémité mâle (22) et inférieure au diamètre du bourrelet (24) pour emprisonner la forme d'extrémité mâle (22) dans ledit logement (26) lorsque ledit casier (56) est dans ladite position en prise; et
dans lequel lesdites parties inférieures (64) desdits pieds intérieurs (60) sont espacées les unes des autres d'une distance qui est supérieure au diamètre du bourrelet de la forme d'extrémité mâle (22) pour permettre au bourrelet (22) de passer entre les sections inférieures (64) lorsque ledit casier (56) est dans ladite position non-engagée.

2. Ensemble raccord rapide selon la revendication 1, dans lequel ledit logement (26) comprend au moins un espace supérieur (59) et dans lequel lesdits pieds intérieurs (60) dudit casier (56) s'étendent à travers ledit au moins un espace supérieur (59).

3. Ensemble raccord rapide selon la revendication 2, comprenant en outre une douille (48) disposée dans ledit logement (26) et dans lequel ladite douille (48) comprend au moins une étagère (66) et dans lequel chacune desdits pieds intérieurs (60) comprend au moins une lèvre (67) destinée à coopérer avec lesdites étagères (66) pour empêcher que ledit casier (56) ne soit retiré dudit logement (26).

4. Ensemble raccord rapide selon l'une quelconque des revendications précédentes dans lequel ledit logement (26) comprend une paire d'espaces inférieurs (69) et dans lequel lesdits pieds intérieurs (60) s'étendent à travers lesdits espaces inférieurs (69) et hors dudit logement (26) lorsque ledit casier (56) est en ladite position en prise.

5. Ensemble raccord rapide selon l'une quelconque des revendications précédentes dans lequel ledit ressort (54) est un ressort ondulé.

6. Ensemble raccord rapide selon l'une quelconque des revendications précédentes, comprenant en outre une douille (48) disposée dans ledit logement (26) et présentant un premier siège à ressort (50) et dans lequel ledit plongeur (52) présente un second siège de ressort (53) et dans lequel ledit ressort (54) s'étend entre lesdits premier et second sièges de ressort (50, 53) pour solliciter ledit piston (52) dans ladite position de repos.

7. Ensemble raccord rapide selon l'une quelconque des revendications précédentes dans lequel ledit logement (26) comprend une première section (38) comprenant au moins un joint d'étanchéité (44) pour établir une relation d'étanchéité avec la forme d'extrémité mâle (22) et une seconde section plus grande (42) contenant ledit plongeur (52) et ledit ressort (54).

8. Ensemble raccord rapide selon l'une quelconque des revendications précédentes, dans lequel le casier (56) comprend une paire de pieds extérieurs (70) destinés à venir en prise avec l'extérieur dudit logement (26) et à guider ledit casier (56) entre lesdits positions en prise et des positions non en prise.

9. Ensemble raccord rapide selon la revendication 8, dans lequel les pieds extérieurs (70) présentent une première section en forme d'arc (72) ayant la même courbure que la surface extérieure dudit logement (26) et une seconde section en forme d'arc (74) ayant la même courbure que la surface extérieure dudit logement (26).

10. Procédé de connexion d'une forme d'extrémité mâle (22) comportant un bourrelet (24) à un ensemble raccord rapide (20) comprenant les étapes consistant à:
solliciter un plongeur (52) dans une première direction dans une position de repos où le plongeur (52) restreint un casier (56) dans une position non engagée;
introduire la forme d'extrémité mâle (22) dans un logement (26) de l'ensemble raccord rapide (20) de sorte que le bourrelet (24) de la forme d'extrémité mâle (22) soit en contact avec le plongeur (52);
solliciter la forme d'extrémité mâle (22) dans une seconde direction opposée à la première direction pour déplacer le plongeur (52) en dehors de la position de repos et le libérer du casier (56); et
déplacer le casier (56) de la position non engagée vers le bas à une position en prise dans laquelle le bourrelet (24) de la forme d'extrémité mâle (22) est coincé entre le plongeur (52) et le casier (56),
le casier (56) comprenant une paire de pieds intérieurs (60) ayant chacun une section supérieure (62) et une section inférieure (64),
dans lequel lesdites parties supérieures (62) desdits pieds intérieurs (60) sont espacées les unes des autres d'une distance qui est supérieure au diamètre de la forme d'extrémité mâle (22) et inférieure au diamètre du bourrelet (24) pour emprisonner la forme d'extrémité mâle (22) dans ledit logement (26) lorsque ledit casier (56) est dans ladite position en prise; et
dans lequel lesdites parties inférieures (64) desdits pieds intérieurs (60) sont espacées les unes des autres d'une distance qui est supérieure au diamètre du bourrelet (24) de la forme d'extrémité mâle (22) pour permettre au bourrelet (22) de passer entre les sections inférieures (64) lorsque ledit casier (56) est dans ladite position non-engagée.

11. Procédé selon la revendication 10, comprenant en outre les étapes du déplacement du casier (56) pour le ramener de la position en prise à la position non engagée, en repoussant la forme d'extrémité mâle (22) hors du logement (26) avec le plongeur sollicité (52).
